# EUROPÄISCHE PATENTSCHRIFT

(11) **EP 3 117 471 B1**
(45) Veröffentlichungstag und Bekanntmachung des Hinweises auf die Patenterteilung: **15.04.2020**
(21) Anmeldenummer: 15741185.1
(22) Anmeldetag: 22.07.2015
(51) Int. Cl.: H01M 2/02

(54) **BATTERIE MIT PRISMATISCHEM GEHÄUSE UND DEREN HERSTELLUNGSVERFAHREN**
PRISMATIC BATTERY CASE AND PROCESS FOR ITS PRODUCTION
CARCASSE PRISMATIQUE POUR BATTERIE ET PROCÉDÉ POUR SA PRODUCTION.

(30) Priorität: 19.08.2014 DE 102014216435
(43) Veröffentlichungstag der Anmeldung: 18.01.2017
(73) Patentinhaber: VW Kraftwerk GmbH, 38440 Wolfsburg (DE); VARTA Microbattery GmbH, 73479 Ellwangen Jagst (DE)
(72) Erfinder: STOCK, Stefan, 73492 Rainau (DE); SCHREIBER, Werner, 38527 Meine (DE); HUTH, Andreas, 73479 Ellwangen (DE); GAUGLER, Andreas, 73479 Ellwangen (DE)
(74) Vertreter: Patentanwaltskanzlei Cartagena
(86) Internationale Anmeldenummer: PCT/EP2015/066810
(87) Internationale Veröffentlichungsnummer: WO 2016/026647

(56) Entgegenhaltungen:
- EP-A2- 2 378 588
- WO-A1-2013/035668
- DE-A1-102011 016 799
- GB-A- 2 087 636
- JP-A- 2012 199 021
- JP-A- 2013 200 974
- US-A1- 2004 058 231
- US-A1- 2012 052 354
- US-A1- 2012 079 713

## Beschreibung

Die vorliegende Erfindung betrifft eine Batterie mit einem prismatischen Batteriegehäuse, in dem mindestens eine positive und mindestens eine negative Batterieelektrode sowie mindestens ein die Elektroden trennender Separator angeordnet sind. Durch das Gehäuse ist mindestens ein Kontaktpol geführt, der elektrisch mit mindestens einer der in dem Gehäuse angeordneten Elektroden verbunden ist.

Lithium-Ionen-Batterien für Kraftfahrzeuge weisen häufig ein prismatisches Metallgehäuse auf. Üblicherweise setzt sich das Gehäuse aus einem Behältnis mit einem rechteckigen Boden und vier im rechten Winkel dazu angeordneten Seitenwänden sowie einem Deckel, der im Wesentlichen die gleiche Form und Größe wie der Boden aufweist, zusammen. Der Deckel ist in aller Regel kaum profiliert und kann als näherungsweise eben bezeichnet werden. Verschlossen wird das Gehäuse, indem die Ränder des Deckels mit dem Öffnungsrand des Behältnisses verschweißt werden.

Der erwähnte mindestens eine Kontaktpol ist in aller Regel durch den Deckel geführt. Vor der Verschweißung muss er mit den Elektroden verbunden werden, was aus produktionstechnischer Sicht Probleme aufwerfen kann, da die in dem Behältnis angeordneten Elektroden nicht frei zugänglich sind.

Aus der DE 10 2011 016 799 A1 ist ein Batteriegehäuse bekannt, das aus zwei U-förmigen Einzelteilen zusammengesetzt wird. Eines der Einzelteile ist aus Metall ausgebildet, das zweite aus Kunststoff. Das aus Metall ausgebildete Einzelteil ist Bestandteil eines Kühlmoduls.

Aus der JP 2012-199021 A ist es bekannt, einen Zellverbund mit einem Stapel von Elektroden in ein Doppelgehäuse, das ein Innengehäuse und ein Außengehäuse umfasst, einzusetzen. Das Außengehäuse besteht aus zwei prismatischen Halbteilen, die an ihren Kanten miteinander verschweißt sind. Das Innengehäuse soll gewährleisten, dass bei der Montage keine Metallpartikel ins Gehäuseinnere gelangen. Der vorliegenden Erfindung lag die Aufgabe zugrunde, die Produktion von Batterien mit prismatischem Gehäuse zu vereinfachen.

Diese Aufgabe wird gelöst durch das Verfahren mit den Merkmalen des Anspruchs 1. Bevorzugte Ausführungsformen des erfindungsgemäßen Verfahrens sind in den abhängigen Ansprüchen 2 bis 6 angegeben. Auch die Batterie mit den Merkmalen des Anspruchs 7 ist Gegenstand der vorliegenden Erfindung.

Das erfindungsgemäße Verfahren dient zur Herstellung einer Batterie mit einem prismatischen Batteriegehäuse. Dieses umfasst ein Bodenelement, ein dazu parallel angeordnetes Deckelement, das die gleiche Größe und Form wie das Bodenelement aufweist, sowie vier, das Boden- und das Deckelement verbindende Seitenelemente. Zusammen definieren diese Elemente einen geschlossenen Innenraum, in dem Funktionsteile der Batterie, insbesondere mindestens eine positive und mindestens eine negative Batterieelektrode sowie mindestens ein die Elektroden trennender Separator, gegebenenfalls auch zwei oder mehr seriell oder parallel zueinander geschaltete Einzelzellen, angeordnet sind.

Der prismatische Aufbau des Batteriegehäuses bedingt, dass an jedes der insgesamt sechs Elemente vier der übrigen fünf Elemente angrenzen. So grenzen beispielsweise die vier Seitenelemente jeweils an das Boden- und an das Deckelement. An ein beliebiges Seitenelement grenzen jeweils zwei weitere Seitenelemente sowie das Boden- und das Deckelement an. Aneinandergrenzende Elemente schließen dabei vorzugsweise einen rechten Winkel ein. Weiterhin ist es bevorzugt, dass jedes der Elemente eben ausgebildet ist und über seine gesamte Fläche eine gleichmäßige Dicke aufweist, beispielsweise eine Dicke im Bereich von 0,5 mm bis 5 mm.

Mindestens eines der Elemente weist eine oder mehrere Durchbrechungen auf, durch die ein Kontaktpol geführt ist, der elektrisch mit mindestens einer der in dem Innenraum angeordneten Elektroden verbunden ist. Dabei muss es sich keineswegs um das Deckelement oder das Bodenelement handeln. Erfindungsgemäß ist es sehr wohl auch möglich, dass die mindestens eine Durchbrechung beispielsweise durch eines der Seitenelemente geführt ist.

In der Regel weist das Gehäuse der Batterie zwei Durchbrechungen sowie zwei durch diese geführte Kontaktpole auf, von denen einer mit der mindestens einen positiven und der zweite mit der mindestens einen negativen Elektrode verbunden ist. In der Regel sind die Kontaktpole durch eine isolierfähige Masse vom Gehäuse elektrisch und mechanisch getrennt, wie das beispielsweise in der DE 100 47 206 A1 beschrieben ist. Sind beide Pole derart isoliert, so ist das Gehäuse potentialfrei.

Grundsätzlich ist es auch möglich, dass das Gehäuse selbst als positiver oder negativer Kontaktpol dient. Zu diesem Zweck muss es elektrisch leitfähig ausgebildet und mit der mindestens einen positiven oder mit der mindestens einen negativen Elektrode verbunden sein. Bevorzugt besteht es aber ohnehin aus Metall, insbesondere aus Aluminium oder aus einer Aluminiumlegierung, oder es ist mit einem metallischen Überzug versehen. Besonders bevorzugt bestehen die Elemente des Gehäuses (das Bodenelement, das Deckelement und die Seitenelemente) aus einem Metallblech, insbesondere aus einem Aluminiumblech.

Die Kontaktpole dienen zum Anschließen eines elektrischen Verbrauchers. Gegebenenfalls können Sie aber auch lediglich als Brücke durch das Gehäuse dienen. In diesen Fällen können beispielsweise spezielle Abgriffspole zum Anschließen eines elektrischen Verbrauchers vorgesehen sein, die über die Kontaktpole mit den Elektroden verbunden sind.

Besonders zeichnet sich das erfindungsgemäße Verfahren dadurch aus, dass das Batteriegehäuse aus zwei vorgefertigten Gehäuseteilen durch Verschweißung zusammengefügt wird, von denen das erste Gehäuseteil zumindest einen Teilbereich des die mindestens eine Durchbrechung aufweisenden Elements sowie zumindest einen Teilbereich eines zweiten Elements, das an das die mindestens eine Durchbrechung aufweisende Element angrenzt, umfasst, und das zweite Gehäuseteil alle die Elemente und/oder Teilbereiche von Elementen umfasst, die nicht Bestandteil des ersten Gehäuseteils sind.

Zur Erläuterung: Jedes Element des Batteriegehäuses (das Bodenelement, das Deckelement und die Seitenelemente) weist eine in den Innenraum weisende Innenseite und eine nach außen weisende Außenseite auf. Die Außenseiten der Elemente ergeben addiert die Oberfläche des Batteriegehäuses. Unter einem Teilbereich eines Elements ist vorliegend besonders bevorzugt ein Teil des Elements zu verstehen, das zwischen 1 % und 99 %, bevorzugt zwischen 10 % und 99 %, besonders bevorzugt zwischen 20 % und 99 %, insbesondere zwischen 25 % und 99 %, der Außenseite des Elements umfasst, also beispielsweise 20 % der Außenseite des Deckelements.

In der Regel umfasst der Teilbereich des die mindestens eine Durchbrechung aufweisenden Elements auch die mindestens eine Durchbrechung selbst. Besonders bevorzugt ist das die mindestens eine Durchbrechung aufweisende Element in seiner Gänze Bestandteil des ersten Gehäusehalbteils.

Darüber hinaus kann es bevorzugt sein, wenn das erste Gehäusehalbteil auch das zweite Element vollständig umfasst. In einigen bevorzugten Ausführungsformen kann es weiter auch ein drittes Element oder einen Teilbereich eines dritten Elements umfassen, das an das zweite Element oder einen Teilbereich desselben oder an das die Durchbrechung aufweisende Element oder einen Teilbereich desselben angrenzt.

In weiteren bevorzugten Ausführungsformen kann das erste Gehäusehalbteil auch ein viertes Element oder einen Teilbereich eines vierten Elements aufweisen, das an das die Durchbrechung aufweisende Element und/oder an das zweite und/oder an das dritte Element oder einen Teilbereich derselben angrenzt.

Das erste und das zweite Gehäuseteil sind bevorzugt einstückig ausgebildet. Sie können beispielsweise mittels Umformung oder mittels Guss hergestellt werden.

Besonders bevorzugt ist das Gehäuse quaderförmig ausgebildet. Bei einem Quader handelt es sich bekanntlich um einen Körper mit sechs rechteckigen Flächen (einer Grundfläche, einer dieser gegenüberliegenden Deckfläche und vier Seitenflächen), deren Winkel sämtlich rechte Winkel sind, sowie acht rechtwinkligen Ecken und zwölf rechtwinkligen Kanten, von denen jeweils vier zueinander parallel sind. Gegenüberliegende Flächen eines Quaders sind immer deckungsgleich.

Die zwei vorgefertigten Gehäuseteile bilden zusammengefügt ein quaderförmiges Gehäuse mit sechs rechteckigen Flächen, acht Ecken und zwölf Kanten, dessen Grundfläche von dem erwähnten Bodenelement gebildet ist und vier Ecken A, B, C und D aufweist und dessen Deckfläche von dem erwähnten Deckelement gebildet ist und vier Ecken E, F, G und H aufweist, wobei die Ecke E über der Ecke A, die Ecke F über der Ecke B, die Ecke G über der Ecke C und die Ecke H über der Ecke D angeordnet ist.

In Übereinstimmung mit den obigen Ausführungen kann die mindestens eine Durchbrechung beispielsweise in die von den Ecken C, D, G und H definierte Seitenfläche oder eine der anderen drei Seitenflächen (definiert durch die Ecken B, C, F und G oder A, B, E und F oder D, A, H und E) eingebracht sein. Alternativ kann sie beispielsweise auch in die von den Ecken E, F, G und H definierte Deckfläche oder in die Grundfläche eingebracht sein.

Erfindungsgemäß werden die zwei Gehäuseteile entlang von Verbindungslinien zusammengefügt, die durch die folgenden Koordinaten definiert sind: A-B-G-H-A, F-CG-DH-E-F, G-H-AE-BF-G oder A-B-F-G-H-D-A
- A-B-G-H-A
   Bei allen Koordinaten handelt es sich um Ecken. Zwei der Verbindungslinien entsprechen Kanten des Gehäuses (A-B und G-H), während es sich bei zwei weiteren Verbindungslinien um flächenteilende Verbindungslinien, bevorzugt um Flächendiagonalen, handelt (B-G und H-A). Alle Verbindungslinien liegen bevorzugt in einer Ebene.
- F-CG-DH-E-F:
   Hierbei handelt es sich bei den Koordinaten um zwei Ecken sowie um zwei Punkte auf den Kanten CG und DH. Lediglich eine der Verbindungslinie (E-F) entspricht einer Kante, die drei anderen Verbindungslinien sind flächenteilende Verbindungslinien. Alle Verbindungslinien liegen bevorzugt in einer Ebene.
- G-H-AE-BF-G
   Hierbei handelt es sich bei den Koordinaten um zwei Ecken sowie um zwei Punkte auf den Kanten AE und BF. Lediglich eine der Verbindungslinie (G-H) entspricht einer Kante, die drei anderen Verbindungslinien sind flächenteilende Verbindungslinien. Alle Verbindungslinien liegen bevorzugt in einer Ebene.
- A-B-F-G-H-D-A
   Bei diesen sechs Koordinaten handelt es sich um Ecken des Gehäuses. Bei allen Verbindungslinien handelt es sich um Kanten.

Die angegebenen Koordinaten stellen jeweils Anfangs- und Endpunkte von Verbindungslinien dar. An jeder Koordinate kommt es zu einem Richtungswechsel der Verbindungslinien, so dass zwei aufeinanderfolgende Verbindungslinien niemals in die gleiche Richtung weisen. Bevorzugt handelt es sich bei den Verbindungslinien um Geraden (insbesondere im Fall von Kanten). Es sind jedoch auch Abweichungen von einer geraden Linienführung denkbar.

In den Fällen, in denen es sich bei den Koordinaten um Punkte auf Kanten handelt, ist es bevorzugt, dass diese Punkte mittig auf den jeweiligen Kanten sitzen, zumindest aber einen Abstand zu den die jeweilige Kante definierenden Ecken von mindestens 10 % der Kantenlänge, besonders bevorzugt von mindestens 25 % der Kantenlänge, aufweisen.

Es ist besonders bevorzugt, dass sich das erste und das zweite Gehäuseteil, abgesehen von der mindestens einen Durchbrechung, symmetrisch zueinander verhalten, insbesondere durch Spiegelung oder Drehspiegelung ineinander überführbar sind. Besonders bevorzugte Beispiele für eine derartige Ausgestaltung der Gehäuseteile sind die bereits erwähnten Fälle
- A-B-G-H-A
- BC-FG-EH-AD-BC
- A-B-F-G-H-D-A

In noch weiter bevorzugten Ausführungsformen handelt es sich bei dem ersten und dem zweiten Gehäuseteil, abgesehen von der mindestens einen Durchbrechung, um Halbteile mit identischer Form und Größe. Beispiele hierfür sind die bereits erwähnten Fälle
- A-B-G-H-A
- BC-FG-EH-AD-BC

In bevorzugten Ausführungsformen umfasst ein erfindungsgemäßes Verfahren einen oder mehrere der folgenden Schritte:
- Mehrere Funktionsteile werden als vormontierte Einheit auf dem ersten Gehäuseteil angeordnet.
- Auf dem ersten Gehäuseteil werden einzelne Funktionsteile zu einer größeren Einheit aus mehreren Funktionsteilen montiert.
- Ein Kontaktpol wird durch eine Durchbrechung in einem der Elemente des ersten Gehäuseteils geführt und in dieser fixiert, so dass er elektrisch von dem die Durchbrechung aufweisenden Element und damit von dem ersten Gehäuseteil isoliert ist.
- Der Kontaktpol wird mit einer der Elektroden elektrisch verbunden.
- Das zweite Gehäuseteil wird mit dem ersten zu einem Gehäuse zusammengefügt.

Die genannten Einzelschritte müssen nicht zwingend in der angegebenen Reihenfolge vorgenommen werden und auch nicht alle bei einer Ausführungsform des erfindungsgemäßen Verfahrens verwirklicht sein. So stehen beispielsweise die beiden erstgenannten Verfahrensschritte in aller Regel alternativ zueinander.

Allen genannten Ausführungsformen ist gemein, dass die Montage der Kontaktpole und deren Kontaktierung mit den jeweiligen Elektroden einfacher vonstattengehen kann als unter Verwendung von Gehäuseteilen, wie sie aus dem Stand der Technik bekannt sind.

Eine erfindungsgemäße Batterie umfasst in Übereinstimmung mit den bisherigen Ausführungen als Funktionsteile mindestens eine positive und mindestens eine negative Batterieelektrode sowie mindestens einen die Elektroden trennenden Separator. Gegebenenfalls umfasst sie auch zwei oder mehr seriell oder parallel zueinander geschaltete Einzelzellen. Darüber hinaus umfasst sie ein prismatisches Gehäuse aus einem Bodenelement, einem dazu parallel angeordneten Deckelement gleicher Größe und Form sowie vier, das Boden- und das Deckelement verbindenden Seitenelementen, die zusammen einen geschlossenen Innenraum definieren, in dem die Funktionsteile der Batterie angeordnet sind. Hierbei weist mindestens eines der Elemente mindestens eine Durchbrechung auf, durch die ein Kontaktpol geführt ist, der einen elektrischen Kontakt zu einer innerhalb des Gehäuses angeordneten positiven und/oder negativen Elektrode herstellt.

Besonders zeichnet sich die erfindungsgemäße Batterie dadurch aus, dass das Batteriegehäuse aus zwei Gehäuseteilen besteht, von denen das erste Gehäuseteil zumindest einen Teilbereich des die mindestens eine Durchbrechung aufweisenden Elements sowie zumindest einen Teilbereich eines zweiten Elements, das an das mindestens eine Durchbrechung aufweisende Element unmittelbar angrenzt, umfasst, und das zweite Gehäuseteil alle die Elemente und/oder Teilbereiche von Elementen umfasst, die nicht Bestandteil des ersten Gehäuseteils sind.

Bevorzugte Ausführungsformen der erfindungsgemäßen Gehäuseteile wurden im Zusammenhang mit dem erfindungsgemäßen Verfahren bereits beschrieben. Zur Vermeidung von Wiederholungen wird auf die entsprechenden Ausführungen hiermit verwiesen.

Besonders betont werden soll allerdings noch einmal, dass in besonders bevorzugten Ausführungsformen das Gehäuse quaderförmig ausgebildet ist mit sechs rechteckigen Flächen, acht Ecken und zwölf Kanten, wobei die Grundfläche des Quaders von dem Bodenelement gebildet ist und vier Ecken A, B, C und D aufweist und die Deckfläche des Quaders von dem Deckelement gebildet ist und vier Ecken E, F, G und H aufweist, wobei die Ecke E über der Ecke A, die Ecke F über der Ecke B, die Ecke G über der Ecke C und die Ecke H über der Ecke D angeordnet ist und wobei das erste und das zweite Gehäuseteil
- entlang der durch die folgenden Koordinaten definierten Verbindungslinien
   - A-B-G-H-A
   - F-CG-DH-E-F
   - G-H-AE-BF-G
   oder
   - A-B-F-G-H-D-A

Weitere Merkmale der Erfindung sowie aus der Erfindung resultierende Vorteile ergeben sich aus der nachfolgenden Beschreibung der Zeichnungen, anhand derer die Erfindung illustriert wird. Es sei an dieser Stelle betont, dass sämtliche in der vorliegenden Anmeldung beschriebenen fakultativen Aspekte des erfindungsgemäßen Verfahrens zum einen für sich allein, zum anderen aber auch in Kombination mit einem oder mehreren weiteren Merkmalen bei einer Ausführungsform der Erfindung verwirklicht sein können. Die nachfolgend beschriebenen bevorzugten Ausführungsformen dienen lediglich zur Erläuterung und zum besseren Verständnis der Erfindung und sind in keiner Weise einschränkend zu verstehen.

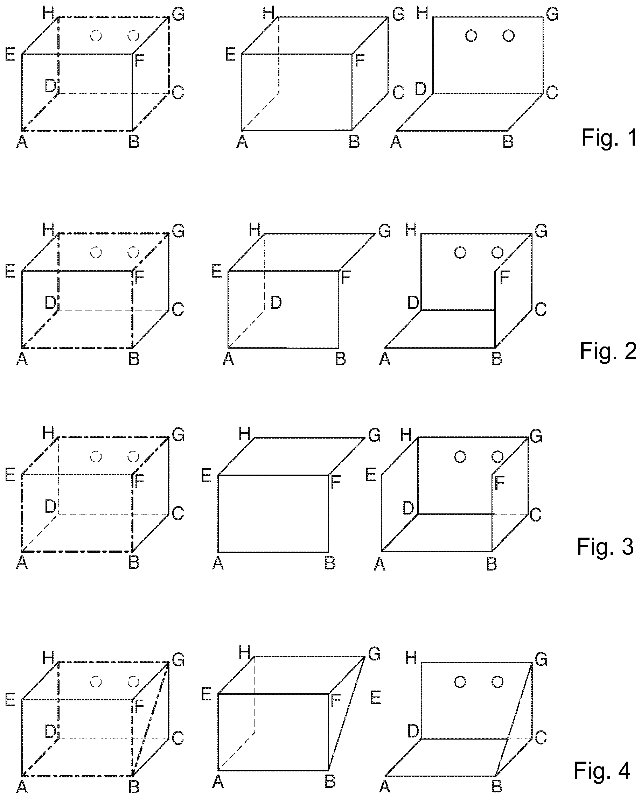

Fig. 1 zeigt eine nicht erfindungsgemäße Ausführungsform eines ersten (rechts) und eines zweiten (Mitte) Gehäuseteils sowie ein daraus zusammengefügtes Gehäuse (links). Das Gehäuse weist ein von den Koordinaten A, B, C und D definiertes Bodenelement sowie ein von den Koordinaten E, F, G und H definiertes Deckelement auf. Diese werden durch vier Seitenelemente (definiert durch die Ecken C, D, G und H sowie B, C, F und G sowie A, B, E und F sowie D, A, H und E) miteinander verbunden. Sowohl das Boden- und das Deckelement als auch die Seitenelemente sind rechteckig ausgebildet. Insgesamt bilden sie einen Quader. Das Gehäuse weist zwei Durchbrechungen auf. Diese sind in das durch die Koordinaten CDGH definierte Seitenelement geführt

Die Verbindungslinien, entlang denen das Gehäuse zusammengefügt ist, sind stärker als die übrigen Linien sowie als "Strich-Punkt-Linie" ausgeführt. Bevorzugt handelt es sich bei diesen Linien um Schweißlinien. Definiert sind die Verbindungslinien durch die Koordinaten A-B-C-G-H-D-A (alle Koordinaten sind Ecken).

Fig. 2 zeigt eine bevorzugte Ausführungsform eines ersten (rechts) und eines zweiten (Mitte) Gehäuseteils sowie ein daraus zusammengefügtes Gehäuse (links). Das Gehäuse weist ein von den Koordinaten A, B, C und D definiertes Bodenelement sowie ein von den Koordinaten E, F, G und H definiertes Deckelement auf. Diese werden durch vier Seitenelemente (definiert durch die Ecken C, D, G und H sowie B, C, F und G sowie A, B, E und F sowie D, A, H und E) miteinander verbunden. Sowohl das Boden- und das Deckelement als auch die Seitenelemente sind rechteckig ausgebildet. Insgesamt bilden sie einen Quader. Das Gehäuse weist zwei Durchbrechungen auf. Diese sind in das durch die Koordinaten CDGH definierte Seitenelement geführt

Die Verbindungslinien, entlang denen das Gehäuse zusammengefügt ist, sind stärker als die übrigen Linien sowie als "Strich-Punkt-Linie" ausgeführt. Bevorzugt handelt es sich bei diesen Linien um Schweißlinien. Definiert sind die Verbindungslinien durch die Koordinaten A-B-F-G-H-D-A (alle Koordinaten sind Ecken).

Fig. 3 zeigt eine nicht erfindungsgemäße Ausführungsform eines ersten (rechts) und eines zweiten (Mitte) Gehäuseteils sowie ein daraus zusammengefügtes Gehäuse (links). Das Gehäuse weist ein von den Koordinaten A, B, C und D definiertes Bodenelement sowie ein von den Koordinaten E, F, G und H definiertes Deckelement auf. Diese werden durch vier Seitenelemente (definiert durch die Ecken C, D, G und H sowie B, C, F und G sowie A, B, E und F sowie D, A, H und E) miteinander verbunden. Sowohl das Boden- und das Deckelement als auch die Seitenelemente sind rechteckig ausgebildet. Insgesamt bilden sie einen Quader. Das Gehäuse weist zwei Durchbrechungen auf. Diese sind in das durch die Koordinaten CDGH definierte Seitenelement geführt

Die Verbindungslinien, entlang denen das Gehäuse zusammengefügt ist, sind stärker als die übrigen Linien sowie als "Strich-Punkt-Linie" ausgeführt. Bevorzugt handelt es sich bei diesen Linien um Schweißlinien. Definiert sind die Verbindungslinien durch die Koordinaten A-B-F-G-H-E-A (alle Koordinaten sind Ecken).

Fig. 4 zeigt eine nicht erfindungsgemäße Ausführungsform eines ersten (rechts) und eines zweiten (Mitte) Gehäuseteils sowie ein daraus zusammengefügtes Gehäuse (links). Das Gehäuse weist ein von den Koordinaten A, B, C und D definiertes Bodenelement sowie ein von den Koordinaten E, F, G und H definiertes Deckelement auf. Diese werden durch vier Seitenelemente (definiert durch die Ecken C, D, G und H sowie B, C, F und G sowie A, B, E und F sowie D, A, H und E) miteinander verbunden. Sowohl das Boden- und das Deckelement als auch die Seitenelemente sind rechteckig ausgebildet. Insgesamt bilden sie einen Quader. Das Gehäuse weist zwei Durchbrechungen auf. Diese sind in das durch die Koordinaten CDGH definierte Seitenelement geführt

Die Verbindungslinien, entlang denen das Gehäuse zusammengefügt ist, sind stärker als die übrigen Linien sowie als "Strich-Punkt-Linie" ausgeführt. Bevorzugt handelt es sich bei diesen Linien um Schweißlinien. Definiert sind die Verbindungslinien durch die Koordinaten A-B-G-H-D-A (alle Koordinaten sind Ecken).

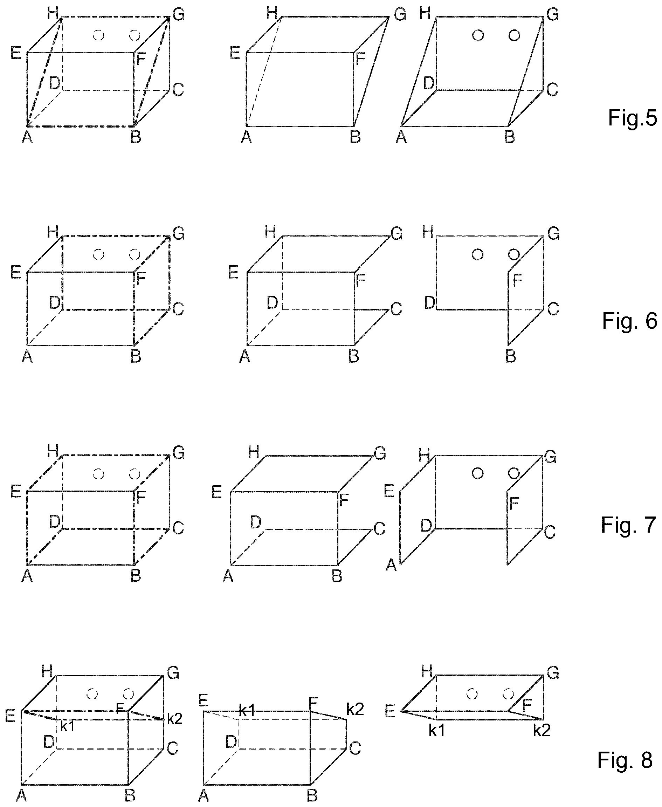

Fig. 5 zeigt eine bevorzugte Ausführungsform eines ersten (rechts) und eines zweiten (Mitte) Gehäuseteils sowie ein daraus zusammengefügtes Gehäuse (links). Das Gehäuse weist ein von den Koordinaten A, B, C und D definiertes Bodenelement sowie ein von den Koordinaten E, F, G und H definiertes Deckelement auf. Diese werden durch vier Seitenelemente (definiert durch die Ecken C, D, G und H sowie B, C, F und G sowie A, B, E und F sowie D, A, H und E) miteinander verbunden. Sowohl das Boden- und das Deckelement als auch die Seitenelemente sind rechteckig ausgebildet. Insgesamt bilden sie einen Quader. Das Gehäuse weist zwei Durchbrechungen auf. Diese sind in das durch die Koordinaten CDGH definierte Seitenelement geführt

Die Verbindungslinien, entlang denen das Gehäuse zusammengefügt ist, sind stärker als die übrigen Linien sowie als "Strich-Punkt-Linie" ausgeführt. Bevorzugt handelt es sich bei diesen Linien um Schweißlinien. Definiert sind die Verbindungslinien durch die Koordinaten A-B-G-H-A (alle Koordinaten sind Ecken).

Fig. 6 zeigt eine nicht erfindungsgemäße Ausführungsform eines ersten (rechts) und eines zweiten (Mitte) Gehäuseteils sowie ein daraus zusammengefügtes Gehäuse (links). Das Gehäuse weist ein von den Koordinaten A, B, C und D definiertes Bodenelement sowie ein von den Koordinaten E, F, G und H definiertes Deckelement auf. Diese werden durch vier Seitenelemente (definiert durch die Ecken C, D, G und H sowie B, C, F und G sowie A, B, E und F sowie D, A, H und E) miteinander verbunden. Sowohl das Boden- und das Deckelement als auch die Seitenelemente sind rechteckig ausgebildet. Insgesamt bilden sie einen Quader. Das Gehäuse weist zwei Durchbrechungen auf. Diese sind in das durch die Koordinaten CDGH definierte Seitenelement geführt

Die Verbindungslinien, entlang denen das Gehäuse zusammengefügt ist, sind stärker als die übrigen Linien sowie als "Strich-Punkt-Linie" ausgeführt. Bevorzugt handelt es sich bei diesen Linien um Schweißlinien. Definiert sind die Verbindungslinien durch die Koordinaten B-F-G-H-D-C-B (alle Koordinaten sind Ecken).

Fig. 7 zeigt eine nicht erfindungsgemäße Ausführungsform eines ersten (rechts) und eines zweiten (Mitte) Gehäuseteils sowie ein daraus zusammengefügtes Gehäuse (links). Das Gehäuse weist ein von den Koordinaten A, B, C und D definiertes Bodenelement sowie ein von den Koordinaten E, F, G und H definiertes Deckelement auf. Diese werden durch vier Seitenelemente (definiert durch die Ecken C, D, G und H sowie B, C, F und G sowie A, B, E und F sowie D, A, H und E) miteinander verbunden. Sowohl das Boden- und das Deckelement als auch die Seitenelemente sind rechteckig ausgebildet. Insgesamt bilden sie einen Quader. Das Gehäuse weist zwei Durchbrechungen auf. Diese sind in das durch die Koordinaten CDGH definierte Seitenelement geführt

Die Verbindungslinien, entlang denen das Gehäuse zusammengefügt ist, sind stärker als die übrigen Linien sowie als "Strich-Punkt-Linie" ausgeführt. Bevorzugt handelt es sich bei diesen Linien um Schweißlinien. Definiert sind die Verbindungslinien durch die Koordinaten B-F-G-H-E-A-D-C-B (alle Koordinaten sind Ecken).

Fig. 8 zeigt eine bevorzugte Ausführungsform eines ersten (rechts) und eines zweiten (Mitte) Gehäuseteils sowie ein daraus zusammengefügtes Gehäuse (links). Das Gehäuse weist ein von den Koordinaten A, B, C und D definiertes Bodenelement sowie ein von den Koordinaten E, F, G und H definiertes Deckelement auf. Diese werden durch vier Seitenelemente (definiert durch die Ecken C, D, G und H sowie B, C, F und G sowie A, B, E und F sowie D, A, H und E) miteinander verbunden. Sowohl das Boden- und das Deckelement als auch die Seitenelemente sind rechteckig ausgebildet. Insgesamt bilden sie einen Quader. Das Gehäuse weist zwei Durchbrechungen auf. Diese sind in das durch die Koordinaten CDGH definierte Seitenelement geführt

Die Verbindungslinien, entlang denen das Gehäuse zusammengefügt ist, sind stärker als die übrigen Linien sowie als "Strich-Punkt-Linie" ausgeführt. Bevorzugt handelt es sich bei diesen Linien um Schweißlinien. Definiert sind die Verbindungslinien durch die Koordinaten F-CG-DH-E-F. Hierbei handelt es sich bei den Koordinaten um zwei Ecken (E und F) sowie um zwei Punkte auf den Kanten CG und DH. Die Punkte auf den Kanten CG und DH sind mit k2 und k1 bezeichnet.

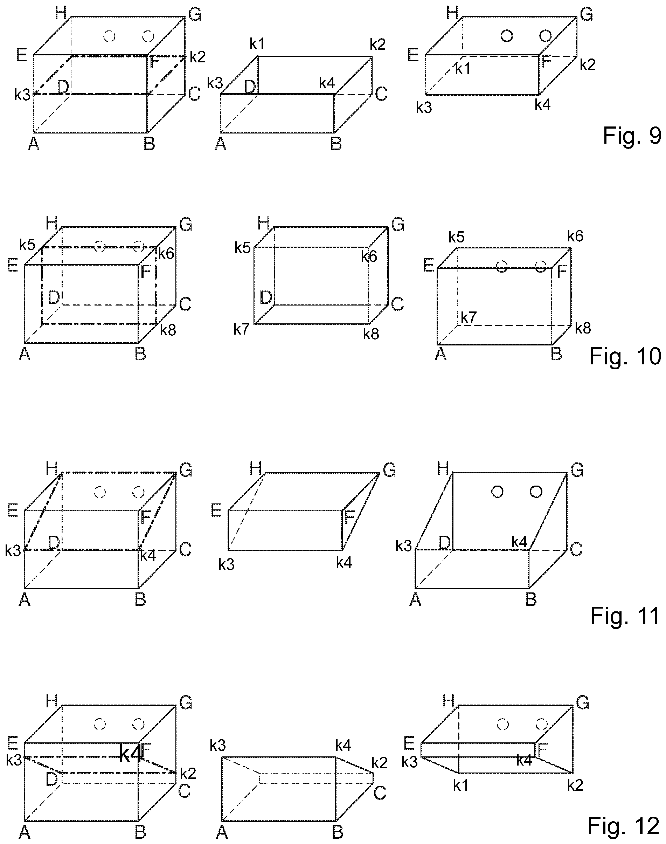

Fig. 9 zeigt eine nicht erfindungsgemäße Ausführungsform eines ersten (rechts) und eines zweiten (Mitte) Gehäuseteils sowie ein daraus zusammengefügtes Gehäuse (links). Das Gehäuse weist ein von den Koordinaten A, B, C und D definiertes Bodenelement sowie ein von den Koordinaten E, F, G und H definiertes Deckelement auf. Diese werden durch vier Seitenelemente (definiert durch die Ecken C, D, G und H sowie B, C, F und G sowie A, B, E und F sowie D, A, H und E) miteinander verbunden. Sowohl das Boden- und das Deckelement als auch die Seitenelemente sind rechteckig ausgebildet. Insgesamt bilden sie einen Quader. Das Gehäuse weist zwei Durchbrechungen auf. Diese sind in das durch die Koordinaten CDGH definierte Seitenelement geführt

Die Verbindungslinien, entlang denen das Gehäuse zusammengefügt ist, sind stärker als die übrigen Linien sowie als "Strich-Punkt-Linie" ausgeführt. Bevorzugt handelt es sich bei diesen Linien um Schweißlinien. Definiert sind die Verbindungslinien durch die Koordinaten AE-BF-CG-DH-AE. Hierbei handelt es sich bei den Koordinaten um vier Punkte auf den Kanten AE, BF, CG und DH. Die Punkte auf den Kanten sind mit k1, k2, k3 und k4 bezeichnet.

Fig. 10 zeigt eine nicht erfindungsgemäße Ausführungsform eines ersten (rechts) und eines zweiten (Mitte) Gehäuseteils sowie ein daraus zusammengefügtes Gehäuse (links). Das Gehäuse weist ein von den Koordinaten A, B, C und D definiertes Bodenelement sowie ein von den Koordinaten E, F, G und H definiertes Deckelement auf. Diese werden durch vier Seitenelemente (definiert durch die Ecken C, D, G und H sowie B, C, F und G sowie A, B, E und F sowie D, A, H und E) miteinander verbunden. Sowohl das Boden- und das Deckelement als auch die Seitenelemente sind rechteckig ausgebildet. Insgesamt bilden sie einen Quader. Das Gehäuse weist zwei Durchbrechungen auf. Diese sind in das durch die Koordinaten CDGH definierte Seitenelement geführt

Die Verbindungslinien, entlang denen das Gehäuse zusammengefügt ist, sind stärker als die übrigen Linien sowie als "Strich-Punkt-Linie" ausgeführt. Bevorzugt handelt es sich bei diesen Linien um Schweißlinien. Definiert sind die Verbindungslinien durch die Koordinaten BC-FG-EH-AD-BC. Hierbei handelt es sich bei den Koordinaten um vier Punkte auf den Kanten AD, BC, FG und EH. Die Punkte auf den Kanten sind mit k5, k6, k7 und k8 bezeichnet.

Fig. 11 zeigt eine bevorzugte Ausführungsform eines ersten (rechts) und eines zweiten (Mitte) Gehäuseteils sowie ein daraus zusammengefügtes Gehäuse (links). Das Gehäuse weist ein von den Koordinaten A, B, C und D definiertes Bodenelement sowie ein von den Koordinaten E, F, G und H definiertes Deckelement auf. Diese werden durch vier Seitenelemente (definiert durch die Ecken C, D, G und H sowie B, C, F und G sowie A, B, E und F sowie D, A, H und E) miteinander verbunden. Sowohl das Boden- und das Deckelement als auch die Seitenelemente sind rechteckig ausgebildet. Insgesamt bilden sie einen Quader. Das Gehäuse weist zwei Durchbrechungen auf. Diese sind in das durch die Koordinaten CDGH definierte Seitenelement geführt

Die Verbindungslinien, entlang denen das Gehäuse zusammengefügt ist, sind stärker als die übrigen Linien sowie als "Strich-Punkt-Linie" ausgeführt. Bevorzugt handelt es sich bei diesen Linien um Schweißlinien. Definiert sind die Verbindungslinien durch die Koordinaten G-H-AE-BF-G. Hierbei handelt es sich bei den Koordinaten um zwei Ecken (G und H) sowie um zwei Punkte auf den Kanten AE und BF. Die Punkte auf den Kanten AE und BF sind mit k3 und k4 bezeichnet.

Fig. 12 zeigt eine nicht erfindungsgemäße Ausführungsform eines ersten (rechts) und eines zweiten (Mitte) Gehäuseteils sowie ein daraus zusammengefügtes Gehäuse (links). Das Gehäuse weist ein von den Koordinaten A, B, C und D definiertes Bodenelement sowie ein von den Koordinaten E, F, G und H definiertes Deckelement auf. Diese werden durch vier Seitenelemente (definiert durch die Ecken C, D, G und H sowie B, C, F und G sowie A, B, E und F sowie D, A, H und E) miteinander verbunden. Sowohl das Boden- und das Deckelement als auch die Seitenelemente sind rechteckig ausgebildet. Insgesamt bilden sie einen Quader. Das Gehäuse weist zwei Durchbrechungen auf. Diese sind in das durch die Koordinaten CDGH definierte Seitenelement geführt

Die Verbindungslinien, entlang denen das Gehäuse zusammengefügt ist, sind stärker als die übrigen Linien sowie als "Strich-Punkt-Linie" ausgeführt. Bevorzugt handelt es sich bei diesen Linien um Schweißlinien. Definiert sind die Verbindungslinien durch die Koordinaten AE-BF-CG-BH-AE. Hierbei handelt es sich bei den Koordinaten um vier Punkte auf den Kanten AE, BF, CG und BH. Die Punkte auf den Kanten sind mit k1, k2, k3 und k4 bezeichnet.

## Patentansprüche

1. Verfahren zur Herstellung einer Batterie mit einem prismatischen Batteriegehäuse umfassend
• ein Bodenelement
• ein dazu parallel angeordnetes Deckelement gleicher Größe und Form, sowie
• vier, das Boden- und das Deckelement verbindende Seitenelemente,
die zusammen einen geschlossenen Innenraum definieren, in dem Funktionsteile der Batterie, insbesondere mindestens eine positive und mindestens eine negative Batterieelektrode sowie mindestens ein die Elektroden trennender Separator, angeordnet sind, wobei
• eines der Elemente mindestens eine Durchbrechung aufweist, durch die ein Kontaktpol geführt ist, der elektrisch mit mindestens einer der in dem Innenraum angeordneten Elektroden verbunden ist,
**dadurch gekennzeichnet, dass**
• das Batteriegehäuse aus zwei vorgefertigten Gehäuseteilen durch Verschweißung zusammengefügt wird, von denen
• das erste Gehäuseteil zumindest einen Teilbereich des die mindestens eine Durchbrechung aufweisenden Elements sowie zumindest einen Teilbereich eines zweiten Elements, das an das die mindestens eine Durchbrechung aufweisende Element angrenzt, umfasst, und
• das zweite Gehäuseteil alle die Elemente und/oder Teilbereiche von Elementen umfasst, die nicht Bestandteil des ersten Gehäuseteils sind
wobei
• die zwei vorgefertigten Gehäuseteile zusammengefügt ein quaderförmiges Gehäuse mit sechs rechteckigen Flächen, acht Ecken und zwölf Kanten, bilden, dessen Grundfläche von dem Bodenelement gebildet ist und vier Ecken A, B, C und D aufweist und dessen Deckfläche von dem Deckelement gebildet ist und vier Ecken E, F, G und H aufweist, wobei die Ecke E über der Ecke A, die Ecke F über der Ecke B, die Ecke G über der Ecke C und die Ecke H über der Ecke D angeordnet ist, und
• die zwei Gehäuseteile entlang der Verbindungslinien A-B-G-H-A, F-CG-DH-E-F, G-H-AE-BF-G oder A-B-F-G-H-D-A zusammengefügt werden.

2. Verfahren nach Anspruch 1, **dadurch gekennzeichnet, dass** das erste Gehäusehalbteil mindestens eines der folgenden Merkmale aufweist:
• Es umfasst das die Durchbrechung aufweisende Element vollständig.
• Es umfasst das zweite Element vollständig.
• Es umfasst ein drittes Element oder einen Teilbereich eines dritten Elements, das an das zweite Element oder einen Teilbereich desselben angrenzt.
• Es umfasst ein drittes Element oder einen Teilbereich eines dritten Elements, das an das die Durchbrechung aufweisende Element oder einen Teilbereich desselben angrenzt.
• Es umfasst ein viertes Element oder einen Teilbereich eines vierten Elements, das an das die Durchbrechung aufweisende Element und/oder an das zweite und/oder an das dritte Element oder einen Teilbereich derselben angrenzt.

3. Verfahren nach einem der Ansprüche 1 oder 2, **dadurch gekennzeichnet, dass** sich das erste und das zweite Gehäuseteil, abgesehen von der mindestens einen Durchbrechung, symmetrisch zueinander verhalten, insbesondere durch Spiegelung oder Drehspiegelung ineinander überführbar sind.

4. Verfahren nach einem der Ansprüche 1 bis 3, **dadurch gekennzeichnet, dass** es sich bei dem ersten und dem zweiten Gehäuseteil, abgesehen von der mindestens einen Durchbrechung, um Halbteile mit identischer Form und Größe handelt.

5. Verfahren nach einem der vorhergehenden Ansprüche, **dadurch gekennzeichnet, dass** die Gehäuseteile durch Verschweißung zusammengefügt werden.

6. Verfahren nach einem der vorhergehenden Ansprüche, **dadurch gekennzeichnet, dass** es einen oder mehrere der folgenden Schritte aufweist:
• Die Funktionsteile werden als vormontierte Einheit auf dem ersten Gehäuseteil angeordnet oder auf dem ersten Gehäuseteil vormontiert
• Ein Kontaktpol wird durch eine Durchbrechung in einem der Elemente des ersten Gehäuseteils geführt und in dieser fixiert, so dass er elektrisch von dem die Durchbrechung aufweisenden Element isoliert ist
• Der Kontaktpol wird mit einer der Elektroden elektrisch verbunden
• Das zweite Gehäuseteil wird mit dem ersten zu dem Gehäuse zusammengefügt

7. Batterie, umfassend mindestens eine positive und mindestens eine negative Batterieelektrode sowie mindestens ein die Elektroden trennender Separator als Funktionsteile sowie ein prismatisches Gehäuse aus
• einem Bodenelement
• einem dazu parallel angeordneten Deckelement gleicher Größe und Form, sowie
• vier, das Boden- und das Deckelement verbindenden Seitenelementen,
die zusammen einen geschlossenen Innenraum definieren, in dem die Funktionsteile der Batterie, angeordnet sind, wobei
• eines der Elemente mindestens eine Durchbrechung aufweist, durch die ein Kontaktpol geführt ist, der einen elektrischen Kontakt zu einer innerhalb des Gehäuses angeordneten positiven und/oder negativen Elektrode herstellt,
**dadurch gekennzeichnet, dass**
• das Batteriegehäuse aus zwei über eine Schweißverbindung zusammengefügten Gehäuseteilen besteht, von denen das erste Gehäuseteil zumindest einen Teilbereich des die mindestens eine Durchbrechung aufweisenden Elements sowie zumindest einen Teilbereich eines zweiten Elements, das an das die mindestens eine Durchbrechung aufweisende Element unmittelbar angrenzt, umfasst, und das zweite Gehäuseteil alle die Elemente und/oder Teilbereiche von Elementen umfasst, die nicht Bestandteil des ersten Gehäuseteils sind
wobei
• das Gehäuse quaderförmiges ausgebildet ist mit sechs rechteckigen Flächen, acht Ecken und zwölf Kanten, wobei die Grundfläche des Quaders von dem Bodenelement gebildet ist und vier Ecken A, B, C und D aufweist und die Deckfläche des Quaders von dem Deckelement gebildet ist und vier Ecken E, F, G und H aufweist, wobei die Ecke E über der Ecke A, die Ecke F über der Ecke B, die Ecke G über der Ecke C und die Ecke H über der Ecke D angeordnet ist und wobei das erste und das zweite Gehäuseteil entlang der Verbindungslinien A-B-G-H-A, F-CG-DH-E-F, G-H-AE-BF-G oder A-B-F-G-H-D-A zusammengefügt sind.

## Claims

1. Method for the production of a battery with a prismatic battery housing, comprising
• a bottom element
• a lid element disposed parallel to said bottom element, having the same size and shape, as well as
• four side elements connecting the bottom element and the lid element,
which together define an enclosed interior, in which functional parts of the battery, especially at least one positive and at least one negative battery electrode as well as at least one separator separating the electrodes, are arranged, wherein
• one of the elements comprises at least one through hole, through which a contact pole is led, which contact pole is electrically connected to at least one of the electrodes disposed in the interior, **characterized in that**
• the battery housing is assembled from two prefabricated housing parts by welding, of which
• the first housing part comprises at least a partial region of the element comprising the at least one through hole as well as at least a partial region of a second element, bordering on the element comprising the at least one through hole, and
• the second housing part comprises all the elements and/or partial regions of elements which are not part of the first housing part,
wherein
• the two prefabricated housing parts joined together form a cuboidal housing with six rectangular surfaces, eight corners and twelve edges, whose base surface is formed by the bottom element and has four corners A, B, C and D and whose top surface is formed by the lid element and has four corners E, F, G and H, wherein the corner E is disposed above the corner A, the corner F above the corner B, the corner G above the corner C and the corner H above the corner D, and
• the two housing parts are joined together along the lines of connection A-B-G-H-A, F-CG-DH-E-F, G-H-AE-BF-G or A-B-F-G-H-D-A.

2. Method according to Claim 1, **characterized in that** the first housing half-piece has at least one of the following features:
• It comprises the element comprising the through hole entirely.
• It comprises the second element entirely.
• It comprises a third element or a partial region of a third element, which borders on the second element or a partial region of same.
• It comprises a third element or a partial region of a third element, which borders on the element comprising the through hole or a partial region of same.
• It comprises a fourth element or a partial region of a fourth element, which borders on the element comprising the through hole and/or on the second and/or on the third element or a partial region of said elements.

3. Method according to either of Claims 1 and 2, **characterized in that** the first and the second housing part have a symmetrical relation to each other, apart from the at least one through hole, and in particular can be converted into each other by mirror imaging or mirror rotation.

4. Method according to one of Claims 1 to 3, **characterized in that** the first and the second housing part, apart from the at least one through hole, are half-pieces of identical size and shape.

5. Method according to one of the preceding claims, **characterized in that** the housing parts are joined together by welding.

6. Method according to one of the preceding claims, **characterized in that** it involves one or more of the following steps:
• The functional parts are arranged as a preassembled unit on the first housing part or premounted on the first housing part
• A contact pole is led through a through hole in one of the elements of the first housing part and fixed therein, so that it is electrically insulated from the element comprising the through hole
• The contact pole is electrically connected to one of the electrodes
• The second housing part is joined together with the first housing part to form the housing.

7. Battery, comprising as functional parts at least one positive and at least one negative battery electrode as well as at least one separator separating the electrodes, and a prismatic housing made up of
• a bottom element
• a lid element disposed parallel to said bottom element, having the same size and shape, as well as
• four side elements connecting the bottom element and the lid element,
which together define an enclosed interior, in which the functional parts of the battery are arranged, wherein
• one of the elements comprises at least one through hole, through which a contact pole is led, which contact pole produces an electrical contact to a positive and/or negative electrode disposed inside the housing,
**characterized in that**
• the battery housing consists of two housing parts joined together by a welded connection, of which the first housing part comprises at least a partial region of the element comprising the at least one through hole as well as at least a partial region of a second element, directly bordering on the element comprising the at least one through hole, and the second housing part comprises all the elements and/or partial regions of elements which are not part of the first housing part,
wherein
• the housing is cuboidal with six rectangular surfaces, eight corners and twelve edges, wherein the base surface of the cuboid is formed by the bottom element and has four corners A, B, C and D and the top surface of the cuboid is formed by the lid element and has four corners E, F, G and H, wherein the corner E is disposed above the corner A, the corner F above the corner B, the corner G above the corner C and the corner H above the corner D and wherein the first and the second housing part are joined together along the lines of connection A-B-G-H-A, F-CG-DH-E-F, G-H-AE-BF-G or A-B-F-G-H-D-A.

## Revendications

1. Procédé de fabrication d'une batterie avec un carter prismatique pour batterie comprenant :
- un élément de fond ;
- un élément de couvercle de même taille et forme disposé parallèlement à lui ; ainsi que
- quatre éléments latéraux reliant l'élément de fond et l'élément de couvercle ;
tous ces éléments définissant ensemble un espace intérieur fermé dans lequel des parties fonctionnelles de la batterie sont disposées, notamment au moins une électrode de batterie positive et au moins une électrode de batterie négative ainsi qu'au moins un séparateur séparant les électrodes ;
- un des éléments comportant au moins une brèche à travers laquelle un pôle de contact est guidé, ledit pôle étant relié électriquement à au moins une des électrodes disposées dans l'espace intérieur ; **caractérisé en ce que** :
- le carter de batterie étant assemblé par soudure à partir de deux parties de carter préfabriquées, parmi lesquelles :
- la première partie de carter comprenant au moins une zone partielle de l'élément comportant au moins une brèche ainsi qu'au moins une zone partielle d'un deuxième élément connexe à l'élément comportant au moins une brèche ; et
- la deuxième partie de carter comprenant tous les éléments et/ou toutes les zones partielles des éléments ne faisant pas partie de la première partie de carter ; dans lequel :
- lorsqu'elles sont assemblées, les deux parties de carter préfabriquées forment un carter en forme de parallélépipède rectangle avec six surfaces rectangulaires, huit angles et douze arêtes dont la surface de fond est formée par l'élément de fond et comporte quatre angles A, B, C et D et dont la surface de couvercle est formée par l'élément de couvercle et comporte quatre angles E, F, G et H, l'angle E étant disposé au-dessus de l'angle A, l'angle F étant disposé au-dessus de l'angle B, l'angle G étant disposé au-dessus de l'angle C et l'angle H étant disposé au-dessus de l'angle D ; et
- les deux parties de carter étant assemblées le long des lignes de liaison A-B-G-H-A, F-CG-DH-E-F, G-H-AE-BF-G ou A-B-F-G-H-D-A.

2. Procédé selon la revendication 1, **caractérisé en ce que** la première demi-partie de carter comporte au moins une des caractéristiques suivantes :
- elle comprend entièrement l'élément comportant la brèche ;
- elle comprend entièrement le deuxième élément ;
- elle comprend un troisième élément ou une zone partielle d'un troisième élément connexe au deuxième élément ou à une zone partielle de celui-ci ;
- elle comprend un troisième élément ou une zone partielle d'un troisième élément connexe à l'élément comportant la brèche ou à une zone partielle de celui-ci ;
- Elle comprend un quatrième élément ou une zone partielle d'un quatrième élément connexe à l'élément comportant la brèche et/ou au deuxième et/ou au troisième élément ou à une zone partielle de ceux-ci.

3. Procédé selon l'une quelconque des revendications 1 ou 2, **caractérisé en ce que** la première et la deuxième partie de carter sont symétriques l'une par rapport à l'autre exception faite de l'au moins une brèche et peuvent notamment être superposées en symétrie par rapport à un axe ou par rapport à un point.

4. Procédé selon l'une quelconque des revendications 1 à 3, caractérisé en ce la première et la deuxième partie de carter sont des demi-parties de taille et de forme identiques, exception faite de l'au moins une brèche.

5. Procédé selon l'une quelconque des revendications précédentes, **caractérisé en ce que** les parties de carter sont assemblées par soudure.

6. Procédé selon l'une quelconque des revendications précédentes, **caractérisé en ce qu'**il comporte une ou plusieurs des étapes suivantes :
- les parties fonctionnelles sont disposées sur la première partie de carter sous la forme d'une unité prémontée ou sont prémontées sur la première partie de carter ;
- un pôle de contact est introduit dans un des éléments de la première partie de carter à travers une brèche et fixé dans celle-ci, de façon à ce qu'il soit isolé électriquement de l'élément comportant la brèche ;
- le pôle de contact est relié électriquement à une des électrodes ;
- la deuxième partie de carter est assemblée à la première partie pour former le carter.

7. Batterie, comprenant au moins une électrode de batterie positive et au moins une électrode de batterie négative ainsi qu'au moins un séparateur séparant les électrodes comme parties fonctionnelles ainsi qu'un carter prismatique composé de :
- un élément de fond
- un élément de couvercle de même taille et forme disposé parallèlement à lui ; ainsi que
- quatre éléments latéraux reliant l'élément de fond et l'élément de couvercle,
tous ces éléments définissant ensemble un espace intérieur fermé dans lequel les parties fonctionnelles de la batterie sont disposées ;
- un des éléments comportant au moins une brèche à travers laquelle un pôle de contact est guidé, ledit pôle établissant un contact électrique avec une électrode positive et/ou négative disposée à l'intérieur du carter ;
**caractérisée en ce que** :
- le carter de batterie se compose de deux parties de carter assemblées par liaison soudée parmi lesquelles la première partie de carter comprend au moins une zone partielle de l'élément comportant au moins une brèche ainsi qu'au moins une zone partielle d'un deuxième élément directement connexe à l'élément comportant au moins une brèche et la deuxième partie de carter comprenant tous les éléments et/ou toutes les zones partielles des éléments ne faisant pas partie de la première partie de carter ;
dans laquelle :
- le carter est réalisé en forme de parallélépipède rectangle avec six surfaces rectangulaires, huit angles et douze arêtes, la surface de fond du parallélépipède rectangle étant formée par l'élément de fond et comportant quatre angles A, B, C et D et la surface de couvercle du parallélépipède rectangle étant formée par l'élément de couvercle et comportant quatre angles E, F, G et H, l'angle E étant disposé au-dessus de l'angle A, l'angle F étant disposé au-dessus de l'angle B, l'angle G étant disposé au-dessus de l'angle C et l'angle H étant disposé au-dessus de l'angle D et la première et la deuxième partie de carter étant assemblées le long des lignes de liaison A-B-G-H-A, F-CG-DH-E-F, G-H-AE-BF-G ou A-B-F-G-H-D-A.
